Europäisches Patentamt

European Patent Office

Office européen des brevets

(19)

(11) **EP 0 978 526 B1**

(12) **EUROPEAN PATENT SPECIFICATION**

(45) Date of publication and mention
of the grant of the patent:
**27.11.2002 Bulletin 2002/48**

(51) Int Cl.[7]: **C08G 77/385**, C08G 77/24,
C07F 7/12

(21) Application number: **98917659.9**

(22) Date of filing: **23.04.1998**

(86) International application number:
**PCT/JP98/01885**

(87) International publication number:
**WO 98/047947 (29.10.1998 Gazette 1998/43)**

(54) **PROCESS FOR THE PREPARATION OF FLUOROSILICONE COMPOUNDS HAVING HYDROLYZABLE GROUPS**

VERFAHREN ZUR HERSTELLUNG VON FLUORSILICONVERBINDUNGEN MIT HYDROLYSIERBAREN GRUPPEN

PROCEDE DE PREPARATION DE COMPOSES DE FLUOROSILICONE RENFERMANT DES GROUPES HYDROLYSABLES

(84) Designated Contracting States:
**DE FR GB**

(30) Priority: **24.04.1997 JP 10783897**

(43) Date of publication of application:
**09.02.2000 Bulletin 2000/06**

(73) Proprietor: **ASAHI GLASS COMPANY LTD.**
**Tokyo 100-8405 (JP)**

(72) Inventors:
• **FURUKAWA, Yutaka, Asahi Glass Co.Ltd.,**
**Yokohama-shi, Kanagawa 221-0863 (JP)**
• **KOTERA, Mami, Asahi Glass Co. Ltd.**
**Yokohama-shi, Kanagawa 221-0863 (JP)**

(74) Representative: **Müller-Boré & Partner**
**Patentanwälte**
**Grafinger Strasse 2**
**81671 München (DE)**

(56) References cited:
**EP-A- 0 710 691**      **JP-A- 8 302 020**
**JP-A- 9 286 862**      **JP-A- 10 081 753**

• **CHEMICAL ABSTRACTS, vol. 126, no. 8, 24 February 1997 (1997-02-24) Columbus, Ohio, US; abstract no. 104589, XP002138060 & JP 08 302020 A (TORAY DOW CORNING SILICONE CO LTD)**

**Description**

The present invention relates to a method for producing a hydrolyzable group-containing fluorosilicone compound. The compound of the present invention is useful for various functional materials for which a performance such as water repellency, oil repellency, antifouling property or release property, is required, or as a starting material thereof.

As a method for producing a fluorine-containing silicon compound containing a hydrolyzable group, there is a method which comprises subjecting a cyclic siloxane having a hydrosilyl group and a cyclic siloxane having a perfluoroalkyl group to a ring opening polymerization reaction in the presence of a catalyst to synthesize a straight chain silicone compound having a hydrosilyl group and a perfluoroalkyl group and then addition-reacting a hydrolyzable group-containing vinyl silyl compound such as $CH_2=CHSi(OCH_3)_3$ to the hydrosilyl group of said compound (JP-A-8-302020).

However, the conventional method required a two step reaction, and after the ring opening polymerization reaction, an acid was usually employed, whereby it used to be necessary to carry out neutralization and filtration as post treatments. Further, with respect to the cyclic siloxane having a perfluoroalkyl group, a compound in which the carbon number of the perfluoroalkyl group is large, is difficult to synthesize, and there was also a problem that the ring opening polymerization was difficult. Further, the conventional method had problems such that it was difficult to synthesize a fluorine-containing silicon compound having a small number of siloxane units, it was difficult to optionally change the number or proportion of siloxane units in the compound, and it was difficult to synthesize a compound having a structure other than a straight chain structure. Namely, the conventional method had a problem that it was not a method which can be commonly employed. Further, when it was attempted to optimize the properties such as water repellency, oil repellency, antifouling property and release property of the resulting compound while adjusting the structure, the conventional method had a problem that it was difficult to finely adjust the structure.

Namely, it is an object of the present invention to provide a method for producing a hydrolyzable group-containing fluorosilicone compound by a short process by means of a commonly employed production apparatus using readily available starting materials. Further, another object of the present invention is to provide a method which is excellent in common applicability, whereby fine adjustment of the structure is easy.

Further, still another object of the present invention is to provide a method for efficiently producing a hydrolyzable group-containing fluorosilicone compound wherein the carbon number of the perfluoroalkyl group is large. Further, another object of the present invention is to provide an efficient method whereby post treatment can be omitted, and the reaction can be carried out by a short process.

Namely, the present invention provides a method for producing a hydrolyzable group-containing fluorosilicone compound, which comprises addition-reacting a fluorine-containing unsaturated compound of the following formula A and a hydrolyzable group-containing compound of the following formula B to hydrosilyl groups of a hydrosilicone compound containing at least two units of an organosiloxane unit containing a hydrosilyl group, to form a hydrolyzable group-containing compound having a fluorine-containing organic group of the following formula a directly bonded to a silicon atom and a hydrolyzable group-containing group of the following formula b directly bonded to a silicon atom; provided that symbols in the following formulae have the following meanings:

$R^f$: a monovalent polyfluorohydrocarbon group, or a monovalent polyfluorohydrocarbon group having an etheric oxygen atom,
X: a bivalent hydrocarbon group, or a bivalent hydrocarbon group having an etheric oxygen atom inserted between a carbon-carbon bond,
R: a hydrogen atom, a methyl group, or an ethyl group,
$R^{10}$: a monovalent organic group,
Y: a hydrolyzable group,
a: an integer of from 0 to 3,
b: an integer of from 1 to 3,
c: 2 when R is a hydrogen atom, 3 when R is a methyl group, and 4 when R is an ethyl group:

$$R^f\text{-}X\text{-}CH{=}CHR \qquad\qquad\qquad \text{Formula A}$$

$$(Y)_b(R^{10})_{3-b}si(CH_2)_aCH{=}CH_2 \qquad\qquad\qquad \text{Formula B}$$

$$R^f\text{-}X\text{-}(CH_2)_c\text{-} \qquad\qquad\qquad \text{Formula a}$$

$$(Y)_b(R^{10})_{3-b}Si(CH_2)_{a+2}- \hspace{3cm} \text{Formula b}$$

In the specification, "an organic group" is a group containing carbon, preferably a hydrocarbon group. In this specification, "a hydrocarbon group" means a group composed solely of carbon atoms and hydrogen atoms unless otherwise specified. As the hydrocarbon group, either an aromatic hydrocarbon group or an aliphatic hydrocarbon group may be employed. However, an aliphatic hydrocarbon group is preferred and particularly preferred is an alkyl group. In the present invention, the hydrosilicone compound is a compound having a basic structure wherein at least two organosiloxane units as basic structures of a silicone compound, are connected in a chain and having at least two organosiloxane units having a hydrosilyl group (Si-H), as the organosiloxane units. Further, in the following, an organosiloxane unit having a hydrosilyl group will be referred to as an organosiloxane unit ($h^1$).

The organosiloxane unit ($h^1$) may, for example, be $(R^{10})HSiO_{2/2}$, $H_2SiO_{2/2}$, $RSiO_{3/2}$, $H_3SiO_{1/2}$, $(R^{10})H_2SiO_{1/2}$ or $(R^{10})(R^{11})HSiO_{1/2}$ [provided that each of $R^{10}$ and $R^{11}$ which are independent of each other, is a monovalent organic group].

Further, the hydrosilicone compound may contain an organosiloxane unit ($h^2$) other than the organosiloxane unit ($h^1$). The organosiloxane unit ($h^2$) may, for example, be $(R^{12})(R^{13})SiO_{2/2}$,$(R^{12})SiO_{3/2}$ or $(R^{12})(R)^{13}(R^{14})SiO_{1/2}$ [provided that each of $R^{12}$, $R^{13}$ and $R^{14}$ which are independent of one another, is a monovalent organic group].

As the monovalent organic group in the organosiloxane unit ($h^1$) or ($h^2$), a monovalent hydrocarbon group is preferred, and particularly preferred is an alkyl group. The number of carbon atoms of such an alkyl group is preferably from 1 to 10, particularly preferably from 1 to 4, most preferably 1 (i.e. a methyl group). Further, the alkyl group is preferably of a straight chain structure.

The chain structure of the organosiloxane unit ($h^1$) or ($h^2$) of the hydrosilicone compound is preferably straight-chained or branched, particularly preferably straight-chained. When the hydrosilicone compound is of a straight chain structure, the position at which a hydrogen atom constituting the hydrosilyl group is bonded, is not particularly limited, and it may be bonded to either a $SiO_{1/2}$ unit or a $SiO_{2/2}$ unit, and it is preferred that it is bonded to a $SiO_{2/2}$ unit. Further, when the hydrosilicone compound is of a branched structure, it may contain a siloxane unit ($SiO_{4/2}$ unit) wherein no monovalent organic group is bonded to a silicon atom.

As the hydrosilicone compound, a compound of the following formula H is preferred.

However, the chain of organosiloxane units in the formula H may be block or random. The same applies also to the following description of a silicone compound. Further, symbols in the formula H have the following meanings.

$R^1$: each of $R^1$ in-the formula which may be the same or different is a hydrogen atom or a monovalent organic group, and at least two groups contained in the formula are hydrogen atoms.
$R^2$: each of $R^2$ in the formula which may be the same or different, is a monovalent organic group.
m: an integer of at least 0
n: an integer of at least 1

$$(R^1)_3SiO\cdot[Si(R^2)_2O]_m\cdot[Si(R^1)_2O]_n\cdot Si(R^1)_3 \hspace{2cm} \text{Formula H}$$

When each of $R^1$ and $R^2$ is a monovalent organic group, such a monovalent organic group is preferably an alkyl group, particularly preferably a methyl group. Further, n is preferably from 1 to 40, particularly preferably from 2 to 20. m is preferably at least 1, particularly preferably from 1 to 100, most preferably from 10 to 80. Further, m being 0 means that no $(R^2)_2SiO_{2/2}$ unit exists. n/m is optionally changed depending upon the performance of the desired product, but n/m is preferably from 50/1 to 2/1, particularly preferably from 30/1 to 8/1.

Specific examples of the hydrosilicone compound include compounds of the following formulae. In the following formulae, $R^3$ may be the same or different in the formulae, and is a monovalent organic group, preferably a methyl group. n and m have the same meanings as in the formula H, and k is an integer of at least 2.

$$(R^3)_3SiO\cdot[SiH(R^3)O]_k\cdot[Si(R^3)_2O]_m\cdot Si(R^3)_3 \hspace{1cm} \text{Formula H}^1$$

$$H(R^3)_2SiO\cdot[SiH(R^3)O]_n\cdot[Si(R^3)_2O]_m\cdot Si(R^3)_3$$

$$H(R^3)_2SiO\cdot[Si(R^3)_2O]_m\cdot Si(R^3)_2H$$

$$(R^3)_3SiO \cdot [SiH_2O]_n \cdot [Si(R^3)_2O]_m \cdot Si(R^3)_3$$

The hydrosilicone compound is commercially readily available. Further, when a hydrosilicone compound having an optional structure is required, such a compound may readily be obtainable by a conventional method for production. For example, it may be synthesized by a method wherein dimethyldichlorosilane and methyldichlorosilane are subjected to cohydrolysis at an optional ratio. The reactivity in a such cohydrolysis is high, and a hydrosilicone compound can readily be obtained.

In the present invention, a fluorine-containing unsaturated compound of the formula A and a hydrolyzable-containing compound of the formula B are addition-reacted to hydrosilyl groups of the above-mentioned hydrosilicone compound. In the following, the fluorine-containing unsaturated compound of the formula A is referred to as a compound (A), and the hydrolyzable group-containing compound of the formula B is referred to as a compound (B). Other compounds will also be referred to in the same manner.

In the compound (A), $R^f$ is a monovalent polyfluorohydrocarbon group, a monovalent polyfluorohydrocarbon group containing an etheric oxygen atom. In the following, the monovalent polyfluorohydrocarbon group will be referred to as a $R^f$ group.

In this specification, "$R^f$ group" means a group having at least two hydrogen atoms of a hydrocarbon group substituted by fluorine atoms, and it is preferably a polyfluoroalkyl group. Further, in this specification, "$R^f$ group containing an etheric oxygen atom" means a group having an etheric oxygen atom inserted between a carbon-carbon bond of the $R^f$ group or between X and a carbon atom bonded to X.

The number of fluorine atoms in the $R^f$ group is preferably at least 60%, more preferably at least 80%, most preferably substantially 100%, as represented by (the number of fluorine atoms in the $R^f$ group)/[the number of hydrogen atoms in a hydrocarbon group having the same number of carbon atoms as the $R^f$ group] x 100(%), i.e. a group having substantially all hydrogen atoms in a monovalent hydrocarbon group substituted by fluorine atoms, is preferred. The same applies to the number of fluorine atoms in the $R^f$ group containing an etheric oxygen atom.

$R^f$ in the compound (A) may be of a straight chain or branched structure, particularly preferably of a straight chain structure. When $R^f$ is of a branched structure, it is preferred that the number of carbon atoms in the branched moiety is as small as from 1 to 3, and a structure is preferred in which the branched moiety is present at a terminal portion of $R^f$. The number of carbon atoms of $R^f$ is preferably from 1 to 18, particularly preferably from 4 to 12.

$R^f$ is preferably a polyfluoroalkyl group or a polyfluoroalkyl group containing an etheric oxygen atom, particularly preferably a perfluoroalkyl group or a perfluoroalkyl group containing an etheric oxygen atom, most preferably a perfluoroalkyl group. The carbon number of the perfluoroalkyl group is preferably from 1 to 18, particularly from 4 to 12, most preferably from 6 to 12. The perfluoroalkyl group is preferably of a straight chain structure. The polyfluoroalkyl group containing an etheric oxygen atom is preferably a group containing a polyfluoroxyalkylene moiety, particularly preferably a group containing a perfluoroxyalkylene moiety, most preferably a group containing a perfluoroxyalkylene moiety, wherein the terminal is a perfluoroalkyl group. As such a perfluoroxyalkylene moiety, perfluoroxymethylene, perfluoroxyethylene, perfluoroxypropylene or perfluoroxybutyrene may, for example, be mentioned.

As examples of $R^f$, the following may be mentioned. Further, the following specific examples include groups corresponding to the respective structurally isomeric groups.

Specific examples of the $R^f$ group

$C_4F_9$-{including structurally isomeric groups such as $CF_3(CF_2)_3$-, $(CF_3)_2CFCF_2$-, $(CF_3)_3C$- and $CF_3CF_2CF(CF_3)$-}, $C_5F_{11}$- {including structurally isomeric groups such as $CF_3(CF_2)_4$-, $(CF_3)_2CF(CF_2)_2$-, $(CF_3)_3CCF_2$-, and $CF_3(CF)_2CF(CF_3)$-}, $C_6F_{13}$- {including structurally isomeric groups such as $CF_3(CF_2)_2C(CF_3)_2$-}, $C_8F_{17}$-, $C_{10}F_{21}$-, $C_{12}F_{25}$-, $C_{14}F_{29}$-, $C_{16}F_{33}$-, $C_{18}F_{37}$-, $C_{20}F_{41}$-, $(CF_3)_2CF(CF_2)_s$- (s is an integer of 0 or at least 1), and $HC_tF_2t$- (t is an integer of 0 or at least 1).

Specific examples of the $R^f$ group containing an etheric oxygen atom

$CF_3(CF_2)_4OCF(CF_3)$-, $F[CF(CF_3)CF_2O]_uCF(CF_3)CF_2CF_2$- (u is an integer of at least 1), $F[CF(CF_3)CF_2O]_rCF(CF_3)$- (r is an integer of at least 1), $F(CF_2CF_2CF_2O)_vCF_2CF_2$- (v is an integer of at least 1, and $F(CF_2CF_2O)_wCF_2CF_2$- (w is an integer of at least 1).

Further, X in the Formula A is a bivalent hydrocarbon group, or a bivalent hydrocarbon group having an etheric oxygen atom inserted between a carbon-carbon bond. As X which is a bivalent hydrocarbon group, an alkylene group is preferred. Such an alkylene group may be of a straight chain structure or a branched structure. However, the alkylene group is preferably a straight chain alkylene group of -$(CH_2)_p$- (wherein p is an integer of from 1 to 10, preferably an integer of from 1 to 4), particularly preferably -$(CH_2)_2$- or -$(CH_2)_3$-. When it is of a branched structure, the number of carbon-atoms of the branched moiety is preferably as small as from about 1 to 3.

Further, as the bivalent hydrocarbon group containing an etheric oxygen atom, $-(CH_2)_q-O-(CH_2)_r-$ (wherein each of q and r which are independent of each other, is an integer of from 1 to 10, preferably an integer of from 2 to 4). R in the compound (A) is a hydrogen atom, a methyl group or an ethyl group, preferably a hydrogen atom. The compound (A) is a known compound and can be obtained by a known method for production. Of the compounds of the formula A, at least one type may be used in the method for production of the present invention.

A compound such that R in the compound (A) is a hydrogen atom, is a compound ($A^1$) of the following formula ($A^1$) In the formula, $R^f$ and X have the same meanings as in the Formula A.

$$Rf-X-CH=CH_2 \qquad \text{Formula A}^1$$

Further, as the compound ($A^1$), a compound of the following formula $A^{11}$, $A^{12}$ or $A^{13}$ is preferred.

However, symbols in the following formulae have the following meanings.

$R^{f1}$: a $R^f$ group,
$R^{f2}$: a $R^f$ group containing an etheric oxygen atom,
$R^{f3}$: a $R^f$ group,
Each of $X^1$, $X^2$, $X^3$, $X^4$ and $X^5$ which are independent of one another: a bivalent hydrocarbon group,
Each of s and t which are independent of each other, is an integer of from 0 to 7,
Each of x and y which are independent of one another: an integer of at least 0, preferably an integer of from 0 to 4:

$$R^{f1}-X^1-CH=CH_2 \qquad \text{Formula A}^{11}$$

$$R^{f2}-(X^2)_x-O-(CH_2)_s CH=CH_2 \qquad \text{Formula A}^{12}$$

$$R^{f3}-(X^4)_y-O-(CH_2)_t CH=CH_2 \qquad \text{Formula A}^{13}$$

As specific examples of the compound ($A^{11}$), the following compounds may be mentioned. Further, the structures of perfluoroalkyl groups in the following formulae, include both the straight chain structures and branched structures, and the straight chain structures are preferred.

$$C_4F_9CH_2CH=CH_2$$

$$C_4F_9(CH_2)_2CH=CH_2$$

$$C_4F_9(CH_2)_3CH=CH_2$$

$$C_4F_9(CH_2)_4CH=CH_2$$

$$C_5F_{11}CH_2CH=CH_2$$

$$C_5F_{11}(CH_2)_2CH=CH_2$$

$$C_6F_{13}CH_2CH=CH_2$$

$$C_6F_{13}(CH_2)_2CH=CH_2$$

$$C_8F_{17}CH_2CH=CH_2$$

$$C_8F_{17}(CH_2)_2CH=CH_2$$

$$C_8F_{17}(CH_2)_3CH=CH_2$$

$$C_9F_{19}CH_2CH=CH_2$$

$$C_9F_{19}(CH_2)_2CH=CH_2$$

Further, as the compound ($A^{12}$), the following compounds may be mentioned. However, u, r, v and w represent integers of at least 1.

$$CF_3(CF_2)_4OCF(CF_3)CH_2OCH_2CH=CH_2$$

$$CF_3(CF_2)_4OCF(CF_3)(CH_2)_2OCH_2CH=CH_2$$

$$F[CF(CE_3)CF_2O]_uCF(CF_3)CF_2CF_2CH_2OCH_2$$

$$CH=CH_2$$

$F[CF(CF_3)CF_2O]_uCF(CF_3)CF_2OCH_2CH=CH_2$ $F[CF(CF_3)CF_2O]_rCF(CF_3)CH_2OCH_2CH=CH_2$ (r is an integer of at least one),
$F[CF(CF_3)CF_2O]_3CF(CF_3)CH_2OCH_2CH=CH_2$   $F(CF_2CF_2CF_2O)_vCF_2CF_2CH_2OCH_2CH=CH_2$   $F(CF_2CF_2O)_wCF_2CF_2$ $CH_2OCH_2CH=CH_2$ .
Further, specific examples of the compound ($A^{13}$), the following compounds may be mentioned. However, perfluoroalkyl groups in the following formulae are of straight chain structures.

$$C_4F_9(CH_2)_2OCH_2CH=CH_2$$

$$C_4F_9(CH_2)_3OCH_2CH=CH_2$$

$$C_4F_9CH_2OCH_2CH=CH_2$$

$$C_4F_9CH_2O(CH_2)_2CH=CH_2$$

$$C_4F_9CH_2O(CH_2)_3CH=CH_2$$

$$C_4F_9CH_2O(CH_2)_4CH=CH_2$$

$$C_5F_{11}(CH_2)_2OCH_2CH=CH_2$$

$$C_5F_{11}(CH_2)_3O(CH_2)_2CH=CH_2$$

$$C_6F_{13}(CH_2)_2OCH_2CH=CH_2$$

$$C_8F_{17}(CH_2)_2OCH_2CH=CH_2$$

$$C_8F_{17}(CH_2)_3OCH_2CH=CH_2$$

$$C_8F_{17}CH_2O(CH_2)_3CH=CH_2$$

$$C_9F_{19}(CH_2)_2OCH_2CH=CH_2$$

$$C_9F_{19}(CH_2)_3OCH_2CH=CH_2$$

Further, the following compounds may be mentioned, as compounds (A) other than the formula $A^{11}$, the following formula $A^{12}$ and the following formula $A^{13}$.

$$C_4F_9CH_2CH=CH(CH_3)$$

$$C_4F_9CH_2CH=CH(CH_2CH_3)$$

$$C_4F_9(CH_2)_2CH=CH(CH_3)$$

$$C_4F_9(CH_2)_3CH=CH(CH_2CH_3)$$

$$C_4F_9(CH_2)_4CH=CH(CH_3)$$

$$C_5F_{11}CH_2CH=CH(CH_3)$$

$$C_5F_{11}(CH_2)_2CH=CH(CH_2CH_3)$$

$$C_6F_{13}CH_2CH=CH(CH_3)$$

$$C_6F_{13}(CH_2)_2CH=CH(CH_2CH_3)$$

$$C_8F_{17}CH_2CH=CH(CH_3)$$

$$C_8F_{17}(CH_2)_2CH=CH(CH_2CH_3)$$

$$C_8F_{17}(CH_2)_3CH=CH(CH_3)$$

$$C_9F_{19}CH_2CH=CH(CH_2CH_3)$$

$$C_9F_{19}(CH_2)_2CH=CH(CH_3)$$

In the compound (B), Y is a hydrolyzable group and may, for example, be a halogen atom, an alkoxy group, an acyloxy group, an alkoxy-substituted alkoxy group, an aminoxy group, a carbamoyl group or a ketoxymate group, preferably a halogen atom or an alkoxy group. When the hydrolyzable group is a group containing carbon atoms, the carbon number is preferably from 1 to 8, particularly preferably from 1 to 4. A particularly preferred hydrolyzable group is a halogen atom or a $C_{1-4}$ alkoxy group.

$R^{10}$ in the compound (B), is preferably a monovalent hydrocarbon group, particularly preferably an alkyl group, most preferably a $C_{1-4}$ alkyl group. a in the compound (B) is preferably 0 or 1. When a is 0, Si and $-CH=CH_2$ are directly bonded. Further, b in the compound (B) is preferably 2 or 3, particularly preferably 3.

As specific examples of the compound (B), the following compounds may be mentioned.

$$(CH_3O)_3SiCH=CH_2$$

$$(CH_3O)_3SiCH_2CH=CH_2$$

$$(CH_3)(CH_3O)_2SiCH_2CH=CH_2$$

$$Cl_3SiCH=CH_2$$

$$Cl_3SiCH_2CH=CH_2$$

$$Cl_2(CH_3)SiCH_2CH=CH_2$$

$$(C_2H_5O)_3SiCH=CH_2$$

$$(C_2H_5O)_3SiCH_2CH=CH_2$$

In the present invention, the compound (A) and the compound (B) are addition-reacted to hydrosilyl groups of a hydrosilicone compound. As such an addition reaction, (Method 1) a method of reacting the compound (A) and then reacting the compound (B) or a method of reacting the compound (B) and then reacting the compound (A), and (Method 2) a method of reacting a mixture of the compound (A) and the compound (B), may be mentioned.

In the case of Method 1, either (A) or (B) may be reacted to the above hydrosilyl groups first. Further, it is unnecessary to isolate an intermediate product formed by the reaction of either one of (A) or (B). In Method 1, when the compound (A) is reacted, the reaction temperature is preferably from 80 to 120°C, and the reaction time is preferably from 4 to 6 hours. When the compound (B) is reacted, the reaction temperature is preferably from 80 to 100°C, and the reaction time is preferably from 4 to 6 hours.

In the case of Method 2, it is preferred to employ the compound ($A^1$) as the compound (A). The compound ($A^1$) and the compound (B) show similar reactivity, and thus have a merit that the reaction temperature, the reaction time and the ratio of the compounds can easily be determined. Further, Method 2 is a particularly efficient method in that the desired product can be obtained in a single step reaction. In Method 2, the reaction temperature is preferably from 20 to 200°C, particularly preferably from 80 to 120°C, and the reaction time is preferably from 0.5 to 20 hours, particularly preferably from 2 to 8 hours.

In Methods 1 and 2, the ratio of the compound (A) and the compound (B) is not particularly limited, and may be optionally changed depending upon the structure of the desired product. Usually, the compound (B) is preferably from 0.01 to 50 mols, particularly preferably from 0.1 to 30 mols, per mol of the compound (A).

Further, the compound (A) and the compound (B) are reacted in a total amount of preferably from 1 to 2 equivalents, particularly preferably from 1.02 to 1.1 equivalents, to the hydrosilyl groups in the hydrosilicone compounds. It is undesirable that the hydrosilyl groups will remain in the reaction product of the present invention, since gelation is likely to take place. However, the reactivity of the compound (A) and the compound (B) in the reaction of the present invention, is high, and accordingly, it is possible to avoid such remaining of hydrosilyl groups if they are reacted in an amount of at least equivalent.

Further, in the addition reaction, it is preferred to use a platinum type catalyst. The addition reaction may be carried out in the presence of a solvent, but it is preferred not to use it, since the reaction proceeds sufficiently even without using it. Further, it is preferred to avoid the presence of water as far as possible, in order to avoid the reaction of the compound (B) itself. However, the compound to be used for the reaction of the present invention is relatively hydrophobic, and accordingly it is not particularly required to control the amount of water.

When the compound (A) and the compound (B) are addition-reacted to the above-mentioned hydrosilicone compound, an addition reaction to the hydrosilyl groups takes place to form a hydrolyzable group-containing fluorosilicone compound having a group of the formula a derived from the compound (A) and a hydrolyzable group of the formula b derived from the compound (B), directly bonded to a silicon atom. Here, symbols in the group of the formula a and in the group of the formula b have the same meanings as the meanings of the symbols in the corresponding compounds (A) and (B). Further, c in the group of the formula a is 2 when R is a hydrogen atom, 3 when R is a methyl group, and 4 when the R is an ethyl group. It is considered that when R in the compound (A) is a methyl group or an ethyl group, the carbon-carbon double bond in the compound (A) will move to the terminal during the hydrosilylation reaction, and a hydrosilylation reaction takes place at the terminal $-CH=CH_2$ portion.

The group of the formula a is preferably a group of the following formula $a^{11}$ in a case where the compound $(A^{11})$ is employed as the compound (A), a group of the following formula $a^{12}$ in a case where the compound $(A^{12})$ is employed, or a group of the following formula $a^{13}$ in a case where the compound $(A^{13})$ is employed.

Here, symbols in the formula $a^{11}$, the formula $a^{12}$ and the formula $a^{13}$ have the same meanings as the meanings in the formula $A^{11}$, the formula $A^{12}$ and the formula $A^{13}$.

$$R^{f1}\text{-}X^1\text{-}CH_2CH_2\text{-} \qquad \text{Formula } a^{11}$$

$$R^{f2}\text{-}(X^2)_x\text{-}O\text{-}(CH_2)_sCH_2CH_2\text{-} \qquad \text{Formula } a^{12}$$

$$R^{f3}\text{-}(X^4)_y\text{-}O\text{-}(CH_2)_tCH_2CH_2\text{-} \qquad \text{Formula } a^{13}$$

As groups represented by the formula $a^{11}$, the following groups may be mentioned. In the following formulae, perfluoroalkyl groups are of straight chain structures.

$$C_4F_9\text{-}(CH_2)_3\text{-}$$

$$C_4F_9\text{-}(CH_2)_4\text{-}$$

$$C_5F_{11}\text{-}(CH_2)_3\text{-}$$

$$C_5F_{11}\text{-}(CH_2)_4\text{-}$$

$$C_6F_{13}\text{-}(CH_2)_3\text{-}$$

$$C_8F_{17}\text{-}(CH_2)_3\text{-}$$

$$C_8F_{17}\text{-}(CH_2)_4\text{-}$$

$$C_8F_{17}\text{-}(CH_2)_5\text{-}$$

$$C_9F_{19}\text{-}(CH_2)_3\text{-}$$

$$C_9F_{19}\text{-}(CH_2)_4\text{-}$$

$$C_{10}F_{21}\text{-}(CH_2)_3\text{-}$$

As groups represented by the formula $a^{12}$, the following groups may be mentioned.

$$F[CF(CF_3)CF_2O]_2CF(CF_3)CH_2O(CH_2)_3\text{-}$$

$$F[CF(CF_3)CF_2O]_4CF(CF_3)CH_2O(CH_2)_3\text{-}$$

$$F[CF(CF_3)CF_2O]_4CF(CF_3)CF_2O(CH_2)_3\text{-}$$

$$F(CF_2CF_2CF_2O)_2CF_2CF_2CH_2O(CH_2)_3\text{-}$$

As groups represented by the formula $a^{13}$, the following groups may be mentioned. Further, in the following formulae, perfluoroalkyl groups are of straight chain structures.

$$C_4F_9\text{-}(CH_2)_2\text{-}O\text{-}(CH_2)_3\text{-}$$

$$C_4F_9\text{-}(CH_2)_2\text{-}O\text{-}(CH_2)_4\text{-}$$

$$C_6F_{13}\text{-}(CH_2)_2\text{-}O\text{-}(CH_2)_3\text{-}$$

$$C_8F_{17}\text{-}(CH_2)_2\text{-}O\text{-}(CH_2)_3\text{-}$$

$$C_8F_{17}\text{-}(CH_2)_3\text{-}O\text{-}(CH_2)_3\text{-}$$

Further, groups represented by the formula b, the groups of the following formulae are preferred.

$$(CH_3O)_3Si(CH_2)_2\text{-}$$

$$(CH_3O)_3Si(CH_2)_3\text{-}$$

$$(CH_3O)_2(CH_3)Si(CH_2)_2\text{-}$$

$$(CH_3O)_2(CH_3)Si(CH_2)_3-$$

$$Cl_3Si(CH_2)_3-$$

$$Cl_2(CH_3)Si(CH_2)_3-$$

$$(C_2H_5O)_3Si(CH_2)_2-$$

$$(C_2H_5O)_3Si(CH_2)_3-$$

$$(C_2H_5O)_2(CH_3)Si(CH_2)_2-$$

In the present invention, the hydrolyzable group-containing fluorosilicone compound is preferably a compound of the formula F in a case where the compound of the formula H is employed as the hydrosilicone compound.

Here, symbols in the following formulae have the following meanings.

$R^2$, m and n: respectively have the same meanings as the meanings in the formula H.

$R^4$: a group corresponding to $R^1$ of the formula H; and $R^4$ corresponding to $R^1$ which is a hydrogen atom, is a group of the formula a or a group of the formula b, at least one of said $R^1$ is a group of the formula a, and at least one of said $R^1$ is a group of the formula b. A group corresponding to $R^1$ which is a monovalent organic group is the same monovalent organic group as $R^1$.

$$(R^4)_3SiO \cdot [Si(R^2)_2O]_m \cdot [Si(R^4)_2O]_n \cdot Si(R^4)_3 \qquad \text{Formula F}$$

As specific examples for the formula F, the following compounds may be mentioned, and particularly preferred is a compound of the formula $F^1$ in a case where a compound of the formula $H^1$ is employed as the hydrosilicone compound.

Here, symbols of the following formulae have the following meanings.

$R^a$: a fluorine-containing organic group of the formula a
$R^b$: a hydrolyzable group-containing group of the formula b
$R^3$: have the same meaning as $R^3$ in the formula $H^1$
m: an integer of at least 0
n: an integer of at least 1
k: an integer of at least 2
j: an integer of at least 1, and k>j

$$(R^3)_3SiO \cdot [Si(R^a)(R^3)O]_{k-j} \cdot [Si(R^b)(R^3)O]_j \cdot [Si(R^3)_2O]_m \cdot Si(R^3)_3 \qquad \text{Formula } F^1$$

$$(R^3)_3SiO \cdot [Si(R^a)(R^b)O]_n \cdot [Si(R^3)_2O]_m \cdot Si(R^3)_3$$

$$(R^3)_2(R^a)SiO \cdot [Si(R^3)_2O]_m \cdot Si(R^b)(R^3)_2$$

$$(R^3)_2(R^b)SiO \cdot [Si(R^a)(R^3)O]_n \cdot [Si(R^3)_2O]_m \cdot Si(R^3)_3$$

$$(R^3)_2(R^b)SiO \cdot [Si(R^a)(R^3)O]_n \cdot [Si(R^3)_2O]_m \cdot Si(R^3)_2(R^b)$$

$$(R^3)_2(R^a)SiO\cdot[Si(R^b)(R^3)O]_n\cdot[Si(R^3)_2O]_m\cdot Si(R^3)_3$$

$$(R^3)_2(R^a)SiO\cdot[Si(R^b)(R^3)O]_n\cdot[Si(R^3)_2O]_m\cdot Si(R^a)(R^3)_2$$

Further, in the hydrolyzable group-containing fluorosilicone compound, n is preferably from 1 to 100, particularly preferably from 2 to 50. k is preferably from 2 to 40, particularly preferably from 2 to 10. m is preferably from 1 to 100, particularly preferably from 10 to 80. Further, the hydrolyzable group-containing fluorosilicone compound is preferably a compound which is in a fluidized state at room temperature, and accordingly, the molecular weight is preferably at a level of from $1 \times 10^1$ to $1 \times 10^6$, more preferably from $5 \times 10^1$ to $1 \times 10^4$. The fluorine content in the hydrolyzable group-containing fluorosilicone compound is preferably from 5 to 80 wt%, more preferably from 10 to 50 wt%. The number of hydrolyzable group-containing groups (formula b) in the hydrolyzable group-containing fluorosilicone compound, is preferably from 1 to 10, particularly preferably from 1 to 5.

As specific examples of the hydrolyzable group-containing fluorosilicone compound, the following compounds may be mentioned, provided that $a^{21}$ in the following formulae is a group represented by the following formula $a^{21}$.

$$F[CF(CF_3)CF_2O]_3CF(CF_3)CH_2O(CH_2)_3- \qquad \text{Formula } a^{21}$$

$$(CH_3)_3SiO\cdot\{Si[(CH_2)_3(CF_2)_7CF_3](CH_3)O\}_5\cdot[Si(CH_3)_2O]_{45}\cdot$$
$$\cdot\{Si[(CH_2)_2Si(OCH_3)_3](CH_3)O\}\cdot Si(CH_3)_3$$

$$(CH_3)_3SiO\cdot\{Si[(CH_2)_4(CF_2)_7CF_3](CH_3)O\}_5\cdot[Si(CH_3)_2O]_{45}\cdot$$
$$\cdot\{Si[(CH_2)_2Si(OCH_3)_3](CH_3)O\}\cdot Si(CH_3)_3$$

$$[(CH_3O)_3Si(CH_2)_2](CH_3)_2SiO\cdot\{Si[(CH_2)_3(CF_2)_7CF_3](CH_3)O\}_5\cdot$$
$$\cdot[Si(CH_3)_2O]_{45}\cdot Si(CH_3)_2[(CH_2)_2Si(OCH_3)_3]$$

$$(CH_3)_3SiO\cdot[Si(a^{21})(CH_3)O]_5\cdot[Si(CH_3)_2O]_{45}\cdot$$
$$\cdot\{Si[(CH_2)_2Si(OCH_3)_3](CH_3)O\}\cdot Si(CH_3)_3$$

$$[(CH_3O)_3Si(CH_2)_2](CH_3)_2SiO\cdot\{Si(a^{21})(CH_3)O\}_5\cdot$$
$$\cdot[Si(CH_3)_2O]_{45}\cdot Si(CH_3)_2[(CH_2)_2Si(OCH_3)_3]$$

$$(CH_3)_3SiO\cdot\{Si[(CH_2)_3OCH_2(CF_2)_7CF_3](CH_3)O\}_5\cdot[Si(CH_3)_2)]_{45}\cdot$$
$$\cdot\{Si[(CH_2)_2Si(OCH_3)_3](CH_3)O)\cdot Si(CH_3)_3$$

$$[(CH_3O)_3Si(CH_2)_2](CH_3)_2SiO\cdot\{Si[(CH_2)_3OCH_2(CF_2)_7CF_3](CH_3)O\}_5\cdot$$
$$\cdot[Si(CH_3)_2O]_{45}\cdot Si(CH_3)_2[(CH_2)_2Si(OCH_3)_3]$$

The above described hydrolyzable group-containing fluorosilicone compound is a compound useful for various industrial base materials for which performance of e.g. water and oil repellency, antifauling properties or release properties is required, and as a starting material therefor.

EXAMPLE 1

A 200 cc four-necked flask equipped with a stirrer and a thermometer was thoroughly replaced with nitrogen, and 100 g of an oily compound of the formula $H^2$ was introduced.

The temperature was raised to 90°C, and then, a mixture comprising 230.8 g of $CF_3(CF_2)_7CH_2CH=CH_2$ and chloroplatinic acid (dissolved so that it would be 2 ppm as calculated as platinum), was dropwise added from a dropping funnel into the four-necked flask. As the reaction proceeded, it was observed that the internal temperature rised to 100°C. After stirring for one hour, 8.67 g of $CH_2=CHSi(OCH_3)_3$ was dropwise added. Upon expiration of four hours after confirming disappearance of the H-Si bond by IR, the reaction was stopped. 0.5 g of active carbon was introduced, and stirring was carried out at room temperature for one hour, followed by filtration to obtain a transparent oil. The obtained product was analyzed by NMR and IR, whereby it was confirmed to have a structure of the formula $F^2$.

$$(CH_3)_3SiO \cdot [SiH(CH_3)O]_{20} \cdot [Si(CH_3)_2O]_{30} \cdot Si(CH_3)_3 \qquad \text{Formula } H^2$$

$$(CH_3)_3SiO \cdot \{Si[(CH_2)_3(CF_2)_7CF_3](CH_3)O\}_{18} \cdot$$

$$\cdot \{Si[(CH_2)_2Si(OCH_3)_3](CH_3)O\}_2 \cdot [Si(CH_3)_2O]_{30} \cdot Si(CH_3)_3 \qquad \text{Formula } F^2$$

EXAMPLE 2

Using 230.8 g of $CF_3(CF_2)_2OCF(CF_3)CH_2OCH_2CH=CH_2$ instead of $CF_3(CF_2)_7CH_2CH=CH_2$ in Example 1, the reaction was carried out in the same manner as in Example 1. The obtained product was analyzed by NMR and IR, whereby it was confirmed to have a structure of the formula $F^3$, provided that $a^{22}$ in the following formula means $-(CH_2)_3OCH_2CF(CF_3)O(CF_2)_2CF_3$.

$$(CH_3)_3SiO \cdot [Si(a^{22})(CH_3)O]_{18} \cdot$$

$$\cdot \{Si(CH_2)_2Si(OCH_3)_3](CH_3)O\}_2 \cdot [Si(CH_3)_2O]_{30} \cdot Si(CH_3)_3 \qquad \text{Formula } F^3$$

EXAMPLE 3

Using 252.8 g of $CF_3(CF_2)_7CH_2CH_2OCH_2CH=CH_2$ instead of $CF_3(CF_2)_7CH_2CH=CH_2$ in Example 1, the reaction was carried out in the same manner as in Example 1. The obtained product was analyzed by NMR and IR, whereby it was confirmed to have a structure of the formula $F^4$.

$$(CH_3)_3SiO \cdot \{Si[(CH_2)_3OCH_2CH_2(CF_2)_7CF_3](CH_3)O\}_{18} \cdot$$

$$\cdot \{Si[(CH_2)_2Si(OCH_3)_3](CH_3)O\}_2 \cdot [Si(CH_3)_2O]_{30} \cdot Si(CH_3)_3 \qquad \text{Formula } F^4$$

EXAMPLE 4

Using 242.3 g of a mixture of $CF_3(CF_2)_7CH_2CH_2CH=CH_2$ and $CF_3(CF_2)_7CH_2CH=CHCH_3$ in a molar ratio of 2:3, instead of $CF_3(CF_2)_7CH_2CH=CH_2$ in Example 1, the reaction was carried out in the same manner. As the reaction proceeded, the internal temperature rised to 95°C. The reaction crude liquid was analyzed by gas chromatography (GC), whereby the peak of $CF_3(CF_2)_7CH_2CH_2CH=CH_2$ was found to have disappeared. Further, the internal temperature was raised to 110°C, and the reaction crude liquid was analyzed by GC, whereby the peak of $CF_3(CF_2)_7CH_2CH=CHCH_3$ was found to have disappeared. Further, stirring was carried out for one hour, and then 8.67 g of $CH_2=CHSi(OCH_3)_3$ was dropwise added. Disappearance of the H-Si bond was confirmed by IR, and four hours later, the reaction was terminated. 0.5 g of active carbon was introduced, followed by stirring at room temperature for one hour and then by filtration to obtain a transparent oil. The obtained product was analyzed by NMR and IR, whereby it was confirmed to have a structure of the formula $F^5$.

$$(CH_3)_3SiO \cdot \{Si[(CH_2)_4(CF_2)_7CF_3](CH_3)O\}_{18} \cdot$$

$$\cdot\{Si[(CH_2)_2Si(OCH_3)_3](CH_3)O\}_2\cdot[Si(CH_3)_2O]_{30}\cdot Si(CH_3)_3 \qquad \text{Formula F}^5$$

EXAMPLE 5

In Example 1, 8.67 g of $CH_2=CHSi(OCH_3)_3$ was dropwise added together with $CF_3(CF_2)_7CH_2CH=CH_2$. It was observed that as the reaction proceeded, the internal temperature rose to 100°C. Four hours later, disappearance of the H-Si bond was confirmed by IR, and then the reaction was terminated. 0.5 g of active carbon was introduced, followed by stirring at room temperature for one hour and then by filtration to obtain a transparent oil. The obtained product was analyzed by NMR and IR, whereby it was confirmed to have a structure of the following formula F2.

EXAMPLE 6

In Example 1, 10.6g of $CH_2=CHSi(OCH_2CH_3)_3$ was dropwise added together with $CF_3(CF_2)_7CH_2CH=CH_2$. It was observed that as the reaction proceeded, the internal temperature rose to 100°C. Four hours later, disappearance of the H-Si bond was confirmed by IR, and then the reaction was terminated. 0.5 g of active carbon was introduced, followed by stirring at room temperature for one hour and then by filtration to obtain a transparent oil. The obtained product was analyzed by NMR and IR, whereby it was confirmed to have a structure of the following formula $F^6$.

$$(CH_3)_3SiO\cdot\{Si[(CH_2)_3(CF_2)_7CF_3](CH_3)O\}_{18}\cdot$$

$$\cdot\{Si[(CH_2)_2Si(OCH_2CH_3)_3](CH_3)O\}_2\cdot[Si(CH_3)_2O]_{30}\cdot Si(CH_3)_3 \qquad \text{Formula F}^6$$

According to the method of the present invention, the desired hydrolyzable group-containing fluorosilicone compound can easily be produced by using a readily available starting material by means of the same reactor by omitting e.g. treatments after the reaction. Further, the method of the present invention is a method which can be applied without limitation as to the structure of the desired compound and is excellent in wide applicability.

**Claims**

1. A method for producing a hydrolyzable group-containing fluorosilicone compound, which comprises addition-reacting a fluorine-containing unsaturated compound of the following formula A and a hydrolyzable group-containing compound of the following formula B to hydrosilyl groups of a hydrosilicone compound containing at least two units of an organosiloxane unit containing a hydrosilyl group, to form a hydrolyzable group-containing compound having a fluorine-containing organic group of the following formula a directly bonded to a silicon atom and a hydrolyzable group-containing group of the following formula b directly bonded to a silicon atom; provided that symbols in the following formulae have the following meanings:

   $R^f$: a monovalent polyfluorohydrocarbon group, or a monovalent polyfluorohydrocarbon group having an etheric oxygen atom,
   X: a bivalent hydrocarbon group, or a bivalent hydrocarbon group having an etheric oxygen atom inserted between a carbon-carbon bond,
   R: a hydrogen atom, a methyl group, or an ethyl group,
   $R^{10}$: a monovalent organic group,
   Y: a hydrolyzable group,
   a: an integer of from 0 to 3,
   b: an integer of from 1 to 3,
   c: 2 when R is a hydrogen atom, 3 when R is a methyl group, and 4 when R is an ethyl group:

$$R^f\text{-}X\text{-}CH=CHR \qquad\qquad \text{Formula A}$$

$$(Y)_b(R^{10})_{3-b}Si(CH_2)_aCH=CH_2 \qquad\qquad \text{Formula B}$$

$$R^f\text{-}X\text{-}(CH_2)_c\text{-}\qquad\qquad\text{Formula a}$$

$$(Y)_b(R^{10})_{3\text{-}b}Si(CH_2)_{a+2}\text{-}\qquad\qquad\text{Formula b}$$

2. The method according to Claim 1, wherein a mixture comprising the fluorine-containing unsaturated compound of the formula A and the hydrolyzable group-containing compound of the formula B is reacted to the hydrosilyl groups of the hydrosilicone compound having at least two units of an organosiloxane unit containing a hydrosilyl group.

3. The method according to Claim 1 or 2, wherein the fluorine-containing unsaturated compound of the formula A is a compound of the following formula $A^1$, and the fluorine-containing organic group of the formula a is a group of the following formula $a^1$ ; provided that symbols in the following formulae have the following meanings:

   $R^f$ and X: the same meanings as the meanings in the formula A:

$$R^f\text{-}X\text{-}CH{=}CH_2\qquad\text{Formula A}^1$$

$$R^f\text{-}X\text{-}(CH_2)_2\text{-}\qquad\text{Formula a}^1$$

4. The method according to any one of Claims 1 to 3, wherein the compound of the formula A is a compound of the following formula $A^{11}$, $A^{12}$ or $A^{13}$, and the fluorine-containing organic group of the formula a is a group of the formula $a^{11}$ , $a^{12}$ or $a^{13}$, provided that symbols in the following formulae have the following meanings:

   $R^{f1}$: a monovalent polyfluorohydrocarbon group,
   $R^{f2}$: a monovalent polyfluorohydrocarbon group containing an etheric oxygen atom,
   $R^{f3}$: a monovalent polyfluorohydrocarbon group,
   Each of $X^1$, $X^2$, $X^3$, $X^4$ and $X^5$ which are independent of one another: a bivalent hydrocarbon group,
   Each of s and t which are independent of each other: an integer of from 0 to 7,
   Each of x and y which are independent of each other: an integer of at least 0:

$$R^{f1}\text{-}X^1\text{-}CH{=}CH_2\qquad\text{Formula A}^{11}$$

$$R^{f2}\text{-}(X^2)_x\text{-}O\text{-}(CH_2)_sCH{=}CH_2\qquad\text{Formula A}^{12}$$

$$R^{f3}\text{-}(X^4)_y\text{-}O\text{-}(CH_2)_tCH{=}CH_2\qquad\text{Formula A}^{13}$$

$$R^{f1}\text{-}X^1\text{-}CH_2CH_2\text{-}\qquad\text{Formula a}^{11}$$

$$R^{f2}\text{-}(X^2)_x\text{-}O\text{-}(CH_2)_sCH_2CH_2\text{-}\qquad\text{Formula a}^{12}$$

$$R^{f3}\text{-}(X^4)_y\text{-}O\text{-}(CH_2)_tCH_2CH_2\text{-}\qquad\text{Formula a}^{13}$$

5. The method according to any one of Claims 1 to 4, wherein the hydrosilicone compound is a compound of the following formula H, and the hydrolyzable group-containing fluorosilicone compound is a compound of the following formula F; provided that the chains of organosiloxane units in the following formulae may be block or random, and symbols in the following formulae have the following meanings:

   $R^1$: each of $R^1$ in the formula which may be the same or different from one another, is a hydrogen atom or a monovalent organic group, and at least two groups contained in the formula are hydrogen atoms,

$R^2$: each of $R^2$ in the formula which may be the same or different from one another, is a monovalent organic group,

$R^4$: a group corresponding to $R^1$ of the formula H; and $R^4$ corresponding to $R^1$ which is a hydrogen atom, is a group of the formula a or a group of the formula b, at least one of said $R^1$ is a group of the formula a, and at least one of said $R^1$ is a group of the formula b; and a group corresponding to $R^1$ which is a monovalent organic group is the same monovalent organic group as $R^1$,

m: an integer of at least 0,

n: an integer of at least 1:

$$(R^1)_3SiO \cdot [Si(R^2)_2O]_m \cdot [Si(R^1)_2O]_n \cdot Si(R^1)_3 \qquad \text{Formula H}$$

$$(R^4)_3SiO \cdot [Si(R^2)_2O]_m \cdot [Si(R^4)_2O]_n \cdot Si(R^4)_3 \qquad \text{Formula F}$$

6. The method according to any one of Claims 1 to 5, wherein the hydrosilicone compound is a compound of the following formula $H^1$, and the hydrolyzable group-containing fluorosilicone compound is a compound of the following formula $F^1$; provided that the chains of organosiloxane units in the following formulae may be block or random, and symbols in the following formulae have the following meanings:

$R^a$: a fluorine-containing organic group of the formula a,

$R^b$: a hydrolyzable group-containing group of the formula b,

$R^3$: a monovalent organic group,

m: an integer of at least 0,

k: an integer of at least 2,

j: an integer of at least 1 and k>j:

$$(R^3)_3SiO \cdot [SiH(R^3)O]_k \cdot [Si(R^3)_2O]_m \cdot Si(R^3)_3 \qquad \text{Formula H}^1$$

$$(R^3)_3SiO \cdot (Si(R^a)(R^3)O)_{k-j} \cdot [Si(R^b)(R^3)O]_j \cdot$$

$$[Si(R^3)_2O]_m \cdot Si(R^3)_3 \qquad \text{Formula F}^1$$

7. The method according to Claim 5 or 6, wherein the monovalent organic group is a methyl group.

8. The method according to any one of Claims 1 to 7, wherein Y is an alkoxy group having at most 4 carbon atoms.

9. The method according to Claim 8, wherein Y is a .methoxy group or an ethoxy group.

10. The method according to any one of Claims 1 to 9, wherein the addition reaction is carried out in the absence of a solvent.

**Patentansprüche**

1. Verfahren zum Herstellen einer Fluorsilikonverbindung, die eine hydrolysierbare Gruppe enthält, umfassend die Additions-Umsetzung einer Fluorenthaltenden ungesättigten Verbindung der folgenden Formel A und einer Verbindung, die eine hydrolysierbare Gruppe enthält, der folgenden Formel B an Hydrosilylgruppen einer Hydrosilikonverbindung, die mindestens zwei Einheiten einer Organosiloxaneinheit, die eine Hydrosilylgruppe enthält, enthält, um eine Verbindung zu bilden, die eine hydrolysierbare Gruppe enthält und die eine Fluor-enthaltende, direkt an ein Siliciumatom gebundene organische Gruppe der folgenden Formel a und eine direkt an ein Siliciumatom gebundene Gruppe der folgenden Formel b, die eine hydrolysierbare Gruppe enthält, aufweist, mit der Maßgabe, daß die Symbole in den folgenden Formeln die folgenden Bedeutungen haben:

$R^f$: eine einwertige Polyfluorkohlenwasserstoffgruppe, oder eine einwertige Po-

| | |
|---|---|
| | lyfluorkohlenwasserstoffgruppe, die ein Ethersauerstoffatom aufweist, |
| X: | eine zweiwertige Kohlenwasserstoffgruppe, oder eine zweiwertige Kohlenwasserstoffgruppe, die ein Ethersauerstoffatom, das zwischen eine Kohlenstoff-Kohlenstoffbindung eingefügt ist, aufweist, |
| R: | ein Wasserstoffatom, eine Methylgruppe oder eine Ethylgruppe, |
| $R^{10}$: | eine einwertige organische Gruppe, |
| Y: | eine hydrolysierbare Gruppe, |
| a: | ein ganze Zahl von 0 bis 3, |
| b: | eine ganze Zahl von 1 bis 3, |
| c: | 2, wenn R ein Wasserstoffatom, 3, wenn R eine Methylgruppe und 4, wenn R eine Ethylgruppe ist: |

$$R^f\text{-X-CH=CHR} \qquad \text{Formel A}$$

$$(Y)_b(R^{10})_{3-b}Si(CH_2)_aCH=CH_2 \qquad \text{Formel B}$$

$$R^f\text{-X-}(CH_2)_c\text{-} \qquad \text{Formel a}$$

$$(Y)_b(R^{10})_{3-b}Si(CH_2)_{a+2}\text{-} \qquad \text{Formel b}$$

**2.** Verfahren nach Anspruch 1, wobei ein Gemisch, umfassend die Fluor-enthaltende ungesättigte Verbindung der Formel A und die Verbindung der Formel B, die eine hydrolysierbare Gruppe enthält, mit den Hydrosilylgruppen der Hydrosilikonverbindung, die mindestens zwei Einheiten einer Organosiloxaneinheit, die eine Hydrosilylgruppe enthält, aufweist, reagiert wird.

**3.** Verfahren nach Anspruch 1 oder 2, wobei die Fluor-enthaltende ungesättigte Verbindung der Formel A eine Verbindung der folgenden Formel $A^1$ ist und die Fluor-enthaltende organische Gruppe der Formel a eine Gruppe der folgenden Formel $a^1$ ist, vorausgesetzt, daß die Symbole in den folgenden Formeln die folgenden Bedeutungen haben:

$R^f$ und X: die gleichen Bedeutungen wie die Bedeutungen in der Formel A:

$$R^f\text{-X-CH=CH}_2 \qquad \text{Formel A}^1$$

$$R^f\text{-X-}(CH_2)_2\text{-} \qquad \text{Formel a}^1$$

**4.** Verfahren nach einem der Ansprüche 1 bis 3, wobei die Verbindung der Formel A eine Verbindung der folgenden Formel $A^{11}$, $A^{12}$ oder $A^{13}$ ist, und die Fluor-enthaltende organische Gruppe der Formel a eine Gruppe der Formel $a^{11}$, $a^{12}$ oder $a^{13}$ ist, vorausgesetzt, daß die Symbole in den folgenden Formeln die folgenden Bedeutungen haben:

| | |
|---|---|
| $R^{f1}$: | eine einwertige Polyfluorkohlenwasserstoffgruppe, |
| $R^{f2}$: | eine einwertige Polyfluorkohlenwasserstoffgruppe, die ein Ethersauerstoffatom enthält, |
| $R^{f3}$: | eine einwertige Polyfluorkohlenwasserstoffgruppe, |

jedes von $X^1$, $X^2$, $X^3$, $X^4$ und $X^5$, die unabhängig voneinander sind: eine zweiwertige Kohlenwasserstoffgruppe, jedes von s und t, die unabhängig voneinander sind: eine ganze Zahl von 0 bis 7, jedes von x und y, die unabhängig voneinander sind: eine ganze Zahl von mindestens 0:

$$R^{f1}\text{-X}^1\text{-CH=CH}_2 \qquad \text{Formel A}^{11}$$

$$R^{f2}\text{-}(X^2)_x\text{-}O\text{-}(CH_2)_s CH=CH_2 \qquad \text{Formel A}^{12}$$

$$R^{f3}\text{-}(X^4)_y\text{-}O\text{-}(CH_2)_t CH=CH_2 \qquad \text{Formel A}^{13}$$

$$R^{f1}\text{-}X^1\text{-}CH_2CH_2\text{-} \qquad \text{Formel a}^{11}$$

$$R^{f2}\text{-}(X^2)_x\text{-}O\text{-}(CH_2)_s CH_2CH_2\text{-} \qquad \text{Formel a}^{12}$$

$$R^{f3}\text{-}(X^4)_y\text{-}O\text{-}(CH_2)_t CH_2CH_2\text{-} \qquad \text{Formel a}^{13}$$

**5.** Verfahren nach einem der Ansprüche 1 bis 4, wobei die Hydrosilikonverbindung eine Verbindung der folgenden Formel H ist, und die Fluorsilikonverbindung, die eine hydrolysierbare Gruppe enthält, eine Verbindung der folgenden Formel F ist, vorausgesetzt, daß die Ketten von Organosiloxaneinheiten in den folgenden Formeln blockartig oder statistisch sein können, und die Symbole in den folgenden Formeln die folgenden Bedeutungen haben:

$R^1$: jedes $R^1$ in der Formel, die gleich oder voneinander verschieden sein können, ist ein Wasserstoffatom oder eine einwertige organische Gruppe, und mindestens zwei der in der Formel enthaltenen Gruppen sind Wasserstoffatome,

$R^2$: jedes $R^2$ in der Formel, die gleich oder voneinander verschieden sein können, ist eine einwertige organische Gruppe,

$R^4$: eine Gruppe, welche $R^1$ der Formel H entspricht, und $R^4$ entsprechend $R^1$, welches ein Wasserstoffatom ist, ist eine Gruppe der Formel a oder eine Gruppe der Formel b, mindestens eines der $R^1$ ist eine Gruppe der Formel a, und mindestens eines der $R^1$ ist eine Gruppe der Formel b, und eine Gruppe entsprechend $R^1$, welches eine einwertige organische Gruppe ist, ist dieselbe einwertige organische Gruppe wie $R^1$,

m: eine Ganze Zahl von mindestens 0,

n: eine ganze Zahl von mindestens 1:

$$(R^1)_3SiO\cdot[Si(R^2)_2O]_m\cdot[Si(R^1)_2O]_nSi(R^1)_3 \qquad \text{Formel H}$$

$$(R^4)_3SiO\cdot[Si(R^2)_2O]_m\cdot[Si(R^4)_2O]_nSi(R^4)_3 \qquad \text{Formel F}$$

**6.** Verfahren nach einem der Ansprüche 1 bis 5, wobei die Hydrosilikonverbindung eine Verbindung der folgenden Formel $H^1$ ist und die Fluorsilikonverbindung, die eine hydrolysierbare Gruppe enthält, eine Verbindung der folgenden Formel $F^1$ ist, vorausgesetzt, daß die Ketten von Organosiloxaneinheiten in den folgenden Formeln blockartig oder statistisch sein können, und die Symbole in den folgenden Formeln die folgenden Bedeutungen haben:

$R^a$: eine Fluor-enthaltende organische Gruppe der Formel a,

$R^b$: eine Gruppe der Formel b, die eine hydrolysierbare Gruppe enthält,

$R^3$: eine einwertige organische Gruppe,

m: eine ganze Zahl von mindestens 0,

k: eine ganze Zahl von mindestens 2,

j: eine ganze Zahl von mindestens 1 und k>j:

$$(R^3)_3SiO\cdot[SiH(R^3)O]_k\cdot[Si(R^3)_2O]_m\cdot Si(R^3)_3 \qquad \text{Formel H}^1$$

$$(R^3)_3SiO\cdot[Si(R^a)(R^3)O]_{k-j}\cdot[Si(R^b)(R^3)O]_j\cdot[Si(R^3)_2O]_m\cdot Si(R^3)_3 \qquad \text{Formel F}^1$$

**7.** Verfahren nach Anspruch 5 oder 6, wobei die einwertige organische Gruppe eine Methylgruppe ist.

**8.** Verfahren nach einem der Ansprüche 1 bis 7, wobei Y eine Alkoxygruppe ist, die höchstens 4 Kohlenstoffatome aufweist.

**9.** Verfahren nach Anspruch 8, wobei Y eine Methoxy- oder eine Ethoxygruppe ist.

**10.** Verfahren nach einem der Ansprüche 1 bis 9, wobei die Additionsreaktion in Abwesenheit eines Lösungsmittels durchgeführt wird.

**Revendications**

**1.** Procédé de production d'un composé fluorosilicone contenant un ou des groupes hydrolysables, qui comprend la réaction par addition d'un composé insaturé fluoré de formule A ci-après et d'un composé contenant un ou des groupes hydrolysables, de formule B ci-après avec des groupes hydrosilyle d'un composé hydrosilicone contenant au moins deux motifs d'un motif organosiloxane contenant un groupe hydrosilyle, pour former un composé contenant un ou des groupes hydrolysables ayant un groupe organique fluoré de formule a ci-après directement lié à un atome de silicium et un groupe contenant un ou des groupes hydrolysables de formule b ci-après directement lié à un atome de silicium ; à la condition que les symboles des formules ci-après aient les signification suivantes :

$R^f$ : un groupe polyfluorohydrocarboné monovalent, ou un groupe polyfluorohydrocarboné monovalent ayant un atome d'oxygène d'éther,
X : un groupe hydrocarboné divalent, ou un groupe hydrocarboné divalent ayant un atome d'oxygène d'éther inséré entre une liaison carbone-carbone,
R : un atome d'hydrogène, un groupe méthyle ou un groupe éthyle,
$R^{10}$ : un groupe organique monovalent,
Y : un groupe hydrolysable,
a : un entier de 0 à 3,
b : un entier de 1 à 3,
c : 2 quand R est un atome d'hydrogène, 3 quand R est un groupe méthyle et 4 quand R est un groupe éthyle :

$$R^f\text{-X-CH=CHR} \qquad\qquad \text{Formule A}$$

$$(Y)_b(R^{10})_{3-b}Si\,(CH_2)_a CH=CH_2 \qquad\qquad \text{Formule B}$$

$$R^f\text{-X-}(CH_2)_c\text{-} \qquad\qquad \text{Formule a}$$

$$(Y)_b(R^{10})_{3-b}Si(CH_2)_{a+2}\text{-} \qquad\qquad \text{Formule b}$$

**2.** Procédé selon la revendication 1, dans lequel un mélange comprenant le composé insaturé fluoré de formule A et le composé contenant un ou des groupes hydrolysables, de formule B est mis à réagir avec les groupes hydrosilyle du composé hydrosilicone ayant au moins deux motifs d'un motif organosiloxane contenant un groupe hydrosilyle.

**3.** Procédé selon la revendication 1 ou 2, dans lequel le composé insaturé fluoré de formule A est un composé de formule $A^1$ ci-après, et le groupe organique fluoré de formule a est un groupe de formule $a^1$ ci-après ; à la condition que les symboles des formules ci-après aient les significations suivantes :

$R^f$ et X : les mêmes significations que les significations dans la formule A ;

$$R^f\text{-X-CH=CH}_2 \qquad \text{Formule } A^1$$

$$R^f\text{-}X\text{-}(CH_2)_2\text{-} \qquad \text{Formule a}^1$$

**4.** Procédé selon l'une quelconques des revendications 1 à 3, dans lequel le composé de formule A est un composé de formule $A^{11}$, $A^{12}$ ou $A^{13}$ ci-après, et le groupe organique fluoré de formule a est un groupe de formule $a^{11}$, $a^{12}$ ou $a^{13}$, à la condition que les symboles des formules ci-après aient les significations suivantes :

$R^{f1}$ : un groupe polyfluorohydrocarboné monovalent,
$R^{f2}$ : un groupe polyfluorohydrocarboné monovalent contenant un atome d'oxygène d'éther,
$R^{f3}$ : un groupe polyfluorohydrocarboné monovalent,
chacun de $X^1$, $X^2$, $X^3$, $X^4$ et $X^5$, qui sont indépendants les uns des autres : un groupe hydrocarboné divalent,
chacun de s et t, qui sont indépendants l'un de l'autre : un entier de 0 à 7.
chacun de x et y, qui sont indépendants l'un de l'autre : un entier d'au moins 0 :

$$R^{f1}\text{-}X^1\text{-}CH=CH_2 \qquad \text{Formule A}^{11}$$

$$R^{f2}\text{-}(X^2)_x\text{-}O\text{-}(CH_2)_s CH=CH_2 \qquad \text{Formule A}^{12}$$

$$R^{f3}\text{-}(X^4)_y\text{-}O\text{-}(CH_2)_t CH=CH_2 \qquad \text{Formule A}^{13}$$

$$R^{f1}\text{-}X^1\text{-}CH_2CH_2\text{-} \qquad \text{Formule a}^{11}$$

$$R^{f2}\text{-}(X^2)_x\text{-}O\text{-}(CH_2)_s CH_2CH_2\text{-} \qquad \text{Formule a}^{12}$$

$$R^{f3}\text{-}(X^4)_y\text{-}O\text{-}(CH_2)_t CH_2CH_2\text{-} \qquad \text{Formule a}^{13}$$

**5.** Procédé selon l'une quelconque des revendications 1 à 4, dans lequel le composé hydrosilicone est un composé de formule H ci-après, et le composé fluorosilicone contenant un ou des groupes hydrolysables est un composé de formule F ci-après ; à la condition que les chaînes des motifs organosiloxane des formules ci-après puissent être à bloc ou aléatoire, et que les symboles des formules ci-après aient les significations suivantes :

$R^1$ : chacun des $R^1$, dans la formule, qui peuvent être identiques ou différents les uns des autres, est un atome d'hydrogène ou un groupe organique monovalent, et au moins deux groupes contenus dans la formule sont des atomes d'hydrogène,
$R^2$ : chacun des $R^2$, dans la formule, qui peuvent être identiques ou différents les uns des autres, est un groupe organique monovalent,
$R^4$ : un groupe correspondant à $R^1$ de formule H ; et $R^4$ correspondant à $R^1$ qui est un atome d'hydrogène, est un groupe de formule a ou un groupe de formule b, au moins l'un desdits $R^1$ est un groupe de formule a, et au moins l'un desdits $R^1$ est un groupe de formule b ; et un groupe correspondant à $R^1$ qui est un groupe organique monovalent est le même groupe organique monovalent que $R^1$,
m : un entier d'au moins 0,
n : un entier d'au moins 1 :

$$(R^1)_3 SiO. [Si(R^2)_2 O]_m . [Si(R^1)_2 O]_n . Si(R^1)_3 \qquad\qquad \text{Formule H}$$

$$(R^4)_3 SiO. [Si(R^2)_2 O]_m . [Si(R^4)_2 O]_n . Si(R^4)_3 \qquad\qquad \text{Formule F}$$

**6.** Procédé selon l'une quelconque des revendications 1 à 5, dans lequel le groupe hydrosilicone est un composé de formule $H^1$ ci-après, 'et le composé fluorosilicone contenant un ou des groupes hydrolysables est un composé de formule $F^1$ ci-après ; à la condition que les chaînes des motifs organosiloxane des formules ci-après puissent être à bloc ou aléatoires, et que les symboles des formules ci-après aient les significations suivantes :

$R^a$ : un groupe organique fluoré de formule a,
$R^b$ : un groupe contenant un ou des groupes hydrolysables, de formule b,
$R^3$ : un groupe organique monovalent,
m : un entier d'au moins 0,
k : un entier d'au moins 2,
j : un entier d'au moins 1 et k>j :

$$(R^3)_3SiO.[SiH(R^3)O]_k.[Si(R^3)_2O]_m.Si(R^3)_3 \qquad \text{Formule H}^1$$

$$(R^3)_3SiO.[Si(R^a)(R^3)O]_{k-j}.[Si(R^b)(R^3)O]_j.$$

$$[Si(R^3)_2O]_m.Si(R^3)_3 \qquad \text{Formule F}^1$$

7. Procédé selon la revendication 5 ou 6, dans lequel le groupe organique monovalent est un groupe méthyle.

8. Procédé selon l'une quelconque des revendication 1 à 7, dans lequel Y est un groupe alcoxy ayant au plus 4 atomes de carbone.

9. Procédé selon la revendication 8, dans lequel Y est un groupe méthoxy ou un groupe éthoxy.

10. Procédé selon l'une quelconque des revendications 1 à 9, dans lequel la réaction d'addition est mise en oeuvre en l'absence d'un solvant.